# EUROPEAN PATENT APPLICATION

(11) **EP 3 691 223 A1**
(43) Date of publication of application: **05.08.2020**
(21) Application number: 19220001.2
(22) Date of filing: 30.12.2019
(51) Int. Cl.: H04L 29/08

(54) **COMMUNICATION DEVICE AND COMMUNICATION METHOD USED IN DISTRIBUTED NETWORK**

(30) Priority: 31.01.2019 JP 2019015079
(71) Applicant: FUJITSU LIMITED, Kanagawa 211-8588 (JP)
(72) Inventor: Yamaguchi, Masato, Kanagawa, 211-8588 (JP)
(74) Representative: Hoffmann Eitle

(57) **Abstract**

A communication device among a plurality of communication devices that share a trail includes a first processor, a second processor and a third processor. The first processor is configured to transmit, when data is requested from a first communication device among the plurality of communication devices, the data to the first communication device. The second processor is configured to give the first communication device a right to transmit the data to another communication device. The third processor is configured to record, in the trail, information that indicates the first communication device has the right to transmit the data to another communication device.

## Description

### FIELD

The embodiments discussed herein are related to a communication device and a communication method that are used in a distributed network.

### BACKGROUND

In recent years, the block chain technique has attracted attention as a foundation for implementing virtual currencies. Applying the block chain technique to fields other than virtual currencies has been considered. For example, a focused-on case may be one in which a block chain is used to share information between companies or organizations.

Data trade markets in which a plurality of users participate are known as one type of service that uses the block chain technique. A participant of the data trade market may provide the market with data owned by him/her. The participant may use data that has been provided for the market.

For example, a data trade market may be implemented by a distributed network. In the distributed network, a server is implemented at each of a plurality of sites. Each server reports a list of data (or metadata) owned by the server to another server. When holding data requested by a user, the server provides the user with this data. When not holding data requested by a user, the server acquires such data from another server and provides the user with this data.

A distributed data trading technique is described in, for example, Japanese Laid-open Patent Publication No. 2018-081464. Techniques related to distributed data trading are described in Japanese Laid-open Patent Publication No. 2003-067279, No. 2006-155486, and No. 2006-171822.

In the above-described distributed network, a server holding popular data may be intensively accessed. An intensively accessed server may be incapable of providing requested data. In this case, a redirecting process will be performed between the serer requesting data and the server that has received the request, and hence it will take a long time before the user acquires the data. Thus, the efficiency of data transaction will be decreased.

It is an object in one aspect of the present invention to limit a decrease in the efficiency of transaction that could be caused by intensive access in a data trading system that includes a plurality of communication devices.

### SUMMARU

According to an aspect of the embodiments, a communication device among a plurality of communication devices that share a trail includes a first processor, a second processor and a third processor. The first processor is configured to transmit, when data is requested from a first communication device among the plurality of communication devices, the data to the first communication device. The second processor is configured to give the first communication device a right to transmit the data to another communication device. The third processor is configured to record, in the trail, information that indicates the first communication device has the right to transmit the data to another communication device.

### BRIEF DESCRIPTION OF DRAWINGS

FIG. 1 illustrates an example of a data trading system in accordance with embodiments of the invention;
FIG. 2 illustrates an example of a data acquisition sequence;
FIGS. 3A, 3B, and 4 illustrate an example of a method for giving a proxy transmission right;
FIG. 5 illustrates an example of a trail;
FIGS. 6A, 6B, and 7 illustrate an example of a method for selecting an access server;
FIG. 8 illustrates an example of a data acquisition sequence using a proxy transmission right;
FIG. 9 is a flowchart illustrating an example of a process performed by a server computer that provides data;
FIG. 10 is a flowchart illustrating an example of a process performed by a server computer that acquires data;
FIG. 11 is a flowchart illustrating an example of a process performed by a server computer that provides data according to a proxy transmission right;
FIG. 12 illustrates examples of the functions of a server computer; and
FIG. 13 illustrates an example of the hardware configuration of a server computer.

### DESCRIPTION OF EMBODIMENTS

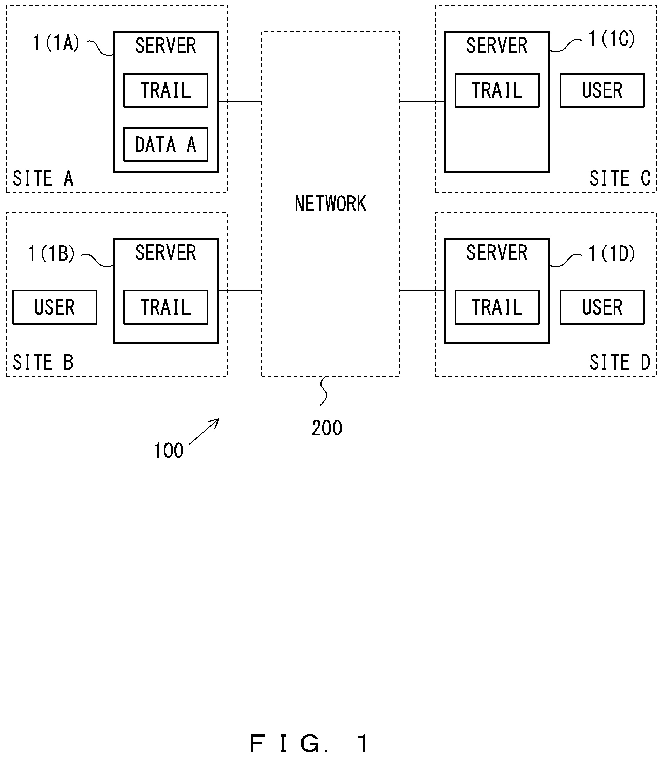

FIG. 1 illustrates an example of a data trading system in accordance with embodiments of the invention. A data trading system 100 in accordance with embodiments of the invention uses a network 200 connecting a plurality of sites A-D. The network 200 may be an optical fiber network, an electric line network, a wireless network, or a combination thereof.

Each of the sites A-D is provided with a server computer 1 (1A-1D). The server computers 1A-1D can communicate with each other over the network 200. Note that each of the server computers 1 is an example of a communication device in accordance with embodiments of the invention.

One or more user terminals may be connected to the server computer 1 of each of the sites A-D. The user terminal may be connected to the server computer 1 via an optical fiber, an electric line, or a wireless link.

Each of the server computers 1A-1D records details of communications performed over the network 200 in a trail. For example, when a data transmission is performed between the server computers, a transmission time and the IDs of a source node, a destination node, and transmitted data may be recorded in the trail. The trail is shared among the server computers 1A-1D. Accordingly, details of a process performed by a certain server computer are reported to all server computers connected to the network 200. Hence, the server computers 1A-1D can refer to the same trail. For example, the trail may be shared using the block chain technique. The trail may be stored in a region that all of the server computers 1 in the network can refer to.

As depicted in FIG. 1, the server computer 1A holds data A. The server computer 1A provides the data trading system with data A. Thus, a user who participates in the data trading system may use or acquire data A. In this example, however, the server computer 1A does not distribute data A to the server computers 1B-1D but distributes metadata for data A to the server computers 1B-1D. For example, the metadata may describe the attribute and compendium of data A.

Each of the server computers 1 processes a data acquisition request received from a user. In particular, when the server computer 1 has data requested by a user in the local storage of this server computer, the server computer 1 provides the user with this data. When the server computer 1 does not have data requested by a user in the local storage of this server computer, the server computer 1 refers to metadata so as to transmit a data acquisition request to another server computer holding the requested data. Then, the server computer 1 provides the user with the data acquired from the other server computer. When a data transmission is performed between the server computers, details of the communication are recorded in the trail of each of the server computers 1A-1D. In this way, the data trading system 100 is implemented by the distributed network in which a plurality of server computers (i.e., communication devices) share the trail.

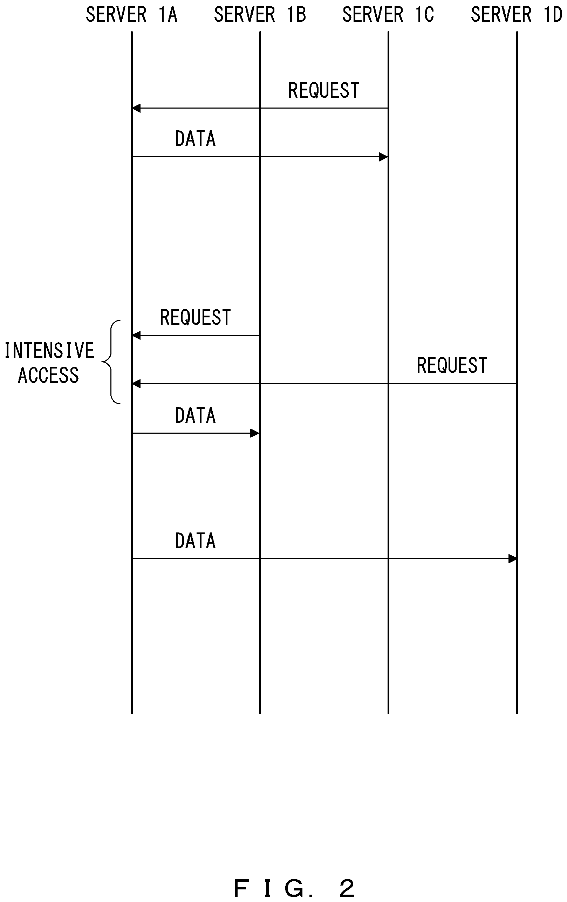

FIG. 2 illustrates an example of a data acquisition sequence. In this example, first, the server computer 1C requests data A. In this case, the server computer 1C transmits a data acquisition request to the server computer 1A. In response to the data acquisition request, the server computer 1A transmits data A to the server computer 1C.

Assume that subsequently, the server computers 1B and 1D request data A. In this case, the server computers 1B and 1D respectively transmit a data acquisition request for data A to the server computer 1A. In response to the data acquisition requests, the server computer 1A transmits data A to each of the server computers 1B and 1D. However, when the server computers 1B and 1D substantially concurrently transmit the data acquisition requests, the response may become slow due to the intensive access to the server computer 1A. For example, a long time may be needed before either or both of the server computers 1B and 1D receive data A. In the example depicted in FIG. 2, the data transmission to the server computer 1D is delayed.

A redirecting process may be performed when a data providing server (server computer 1A with reference to FIG. 2) is intensively accessed. In particular, after an attempt is made to access the data providing server, the access is redirected to another server.

The data trading system in accordance with embodiments of the invention includes functions for reducing such a problem. In particular, the data-providing server computer 1 may give another server computer a right to transmit data by proxy.

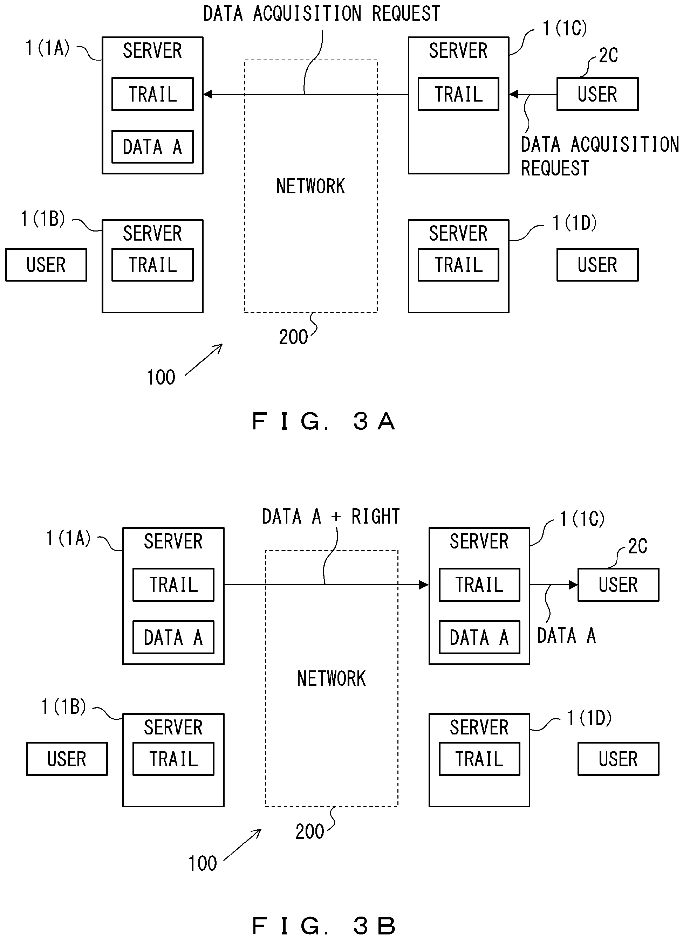

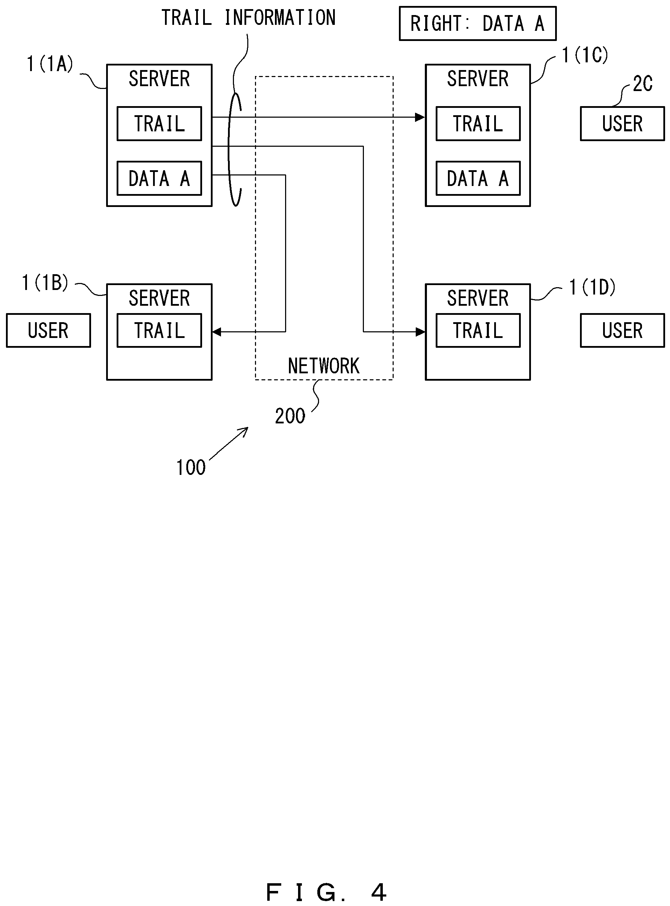

FIGS. 3A, 3B, and 4 illustrate an example of a method for giving a proxy transmission right. In this example, a user 2c requests data A, as depicted in FIG. 3A. In this case, the server computer 1C receives a data acquisition request designating data A from the user 2c.

In this situation, the server computer 1C does not hold data A. Assume that the server computer 1C is aware that the server computer 1A holds data A. Accordingly, the server computer 1C transmits the data acquisition request designating data A to the server computer 1A.

Upon receipt of the data acquisition request, the server computer 1A transmits data A to the server computer 1C, as depicted in FIG. 3B. In this case, the server computer 1A gives the server computer 1C a right to transmit data A to another server computer by proxy. In particular, the server computer 1A makes a request for the server computer 1C to transmit data A by proxy. In this case, the server computer 1A may transmit data A and the proxy transmission request concurrently or separately. The right to transmit data A by proxy may hereinafter be referred to as a "proxy transmission right".

The server computer 1A may set desired conditions for the proxy transmission right. For example, the server computer 1A may set an effective period for the proxy transmission right. Alternatively, the server computer 1A may set, for the proxy transmission right, a node to which data A is to be forwarded or a user who can use data A.

In this example, a proxy transmission right is set for each piece of data. However, the embodiments of the invention are not limited to this. In particular, a single proxy transmission right may be set for a plurality of pieces of data. Alternatively, a proxy transmission right may be set for each server. For example, when the server computer 1A gives the server computer 1C a proxy transmission right, proxy transmission rights may be given for all pieces of data provided from the server computer 1A to the server computer 1C.

The server computer 1C stores the data A received from the server computer 1A in the local storage device of the server computer 1C and provides the user 2c with data A. The server computer 1C also decides whether to accept the proxy transmission right. For example, the server computer 1C may decide whether to accept the proxy transmission right in accordance with the amount of available resource in the server computer 1C. Alternatively, the server computer 1C may decide whether to accept the proxy transmission right in accordance with a reward to be provided to the server computer 1C by the server computer 1A.

When accepting the proxy transmission right, the server computer 1C transmits a response message indicating the acceptance of the proxy transmission right to the server computer 1A. After this response, the server computer 1C acquires the proxy transmission right for data A. From this moment on, when another server computer requests data A, the server computer 1C can provide the other server computer with data A as a proxy for the server computer 1A.

Upon receipt of the response message, the server computer 1A records, in the trail, information indicating that the server computer 1C has the proxy transmission right for data A. The trail needs to be shared among all of the server computers 1A-1D, as described above. Thus, for example, the server computer 1A may transmit information indicating that the server computer 1C has the proxy transmission right for data A to the server computers 1B-1D, as depicted in FIG. 4. Then, the server computers 1B-1D respectively record the received trail information in the trail in the local storage of the server computers. As a result, the trails of the server computers 1A-1D are synchronized with each other.

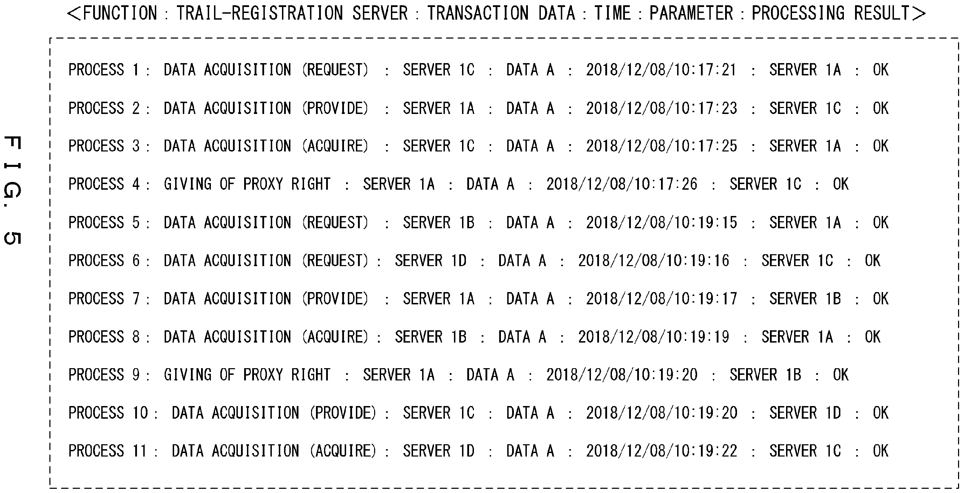

FIG. 5 illustrates an example of a trail. In this example, for each of processes performed by any of the server computers 1A-1D, a function, a trail-registration server, transaction data, a time, a parameter, and a processing result are recorded as trail information. A function indicates the type or details of a process. A trail-registration server indicates a server computer that has performed a process. Transaction data indicates processed data. A time indicates a time at which the process was performed. A parameter indicates additional information pertaining to a process. In one example, a parameter may indicate a correspondent server computer for a performed process. However, a parameter is set as necessary and is not indispensable information. A processing result indicates whether a process succeeded. However, a processing result may indicate whether an agreement has been established on details of a process within the network 200.

For example, trail information pertaining to a "process 1" depicted in FIG. 5 may be recorded when the server computer 1C in FIG. 3A has transmitted a data acquisition request to the server computer 1A. Note that "Function = data acquisition (request)" indicates that a data acquisition request has been transmitted in the data acquisition process. The trail-registration server indicates the source of the data acquisition request. The parameter indicates the destination of the data acquisition request.

Trail information pertaining to a "process 2" is recorded when the server computer 1A in FIG. 3B has transmitted data A to the server computer 1C. "Function = data acquisition (provide)" indicates that data A has been provided (i.e., transmitted) in the data acquisition process. The trail-registration server indicates the source of data A. The parameter indicates the destination of data A.

Trail information pertaining to a "process 3" is recorded when the server computer 1C in FIG. 3B has received data A from the server computer 1A. "Function = data acquisition (acquire)" indicates that data A has been acquired (i.e., received) in the data acquisition process. The trail-registration server indicates a server that has received data A. The parameter indicates the source of data A.

Trail information pertaining to a "process 4" is recorded when the server computer 1A has given the server computer 1C a proxy transmission right for data A. "Function = data proxy right" indicates that the proxy transmission right has been given. The trail-registration server indicates a server that has given the proxy transmission right. The parameter indicates a server that has acquired the proxy transmission right.

The trail updated as described above is shared among all of the server computers 1A-1D connected to the network 200. In particular, every time the trail is updated, the details of the update are reported to each of the server computers 1A-1D. Thus, at this moment, each of the server computers 1A-1D can determine that the processes 1-4 have been performed. Accordingly, by referring to the trail, each of the server computers 1A-1D can determine that data A has been transmitted from the server computer 1A to the server computer 1C and that the server computer 1C has the proxy transmission right for data A.

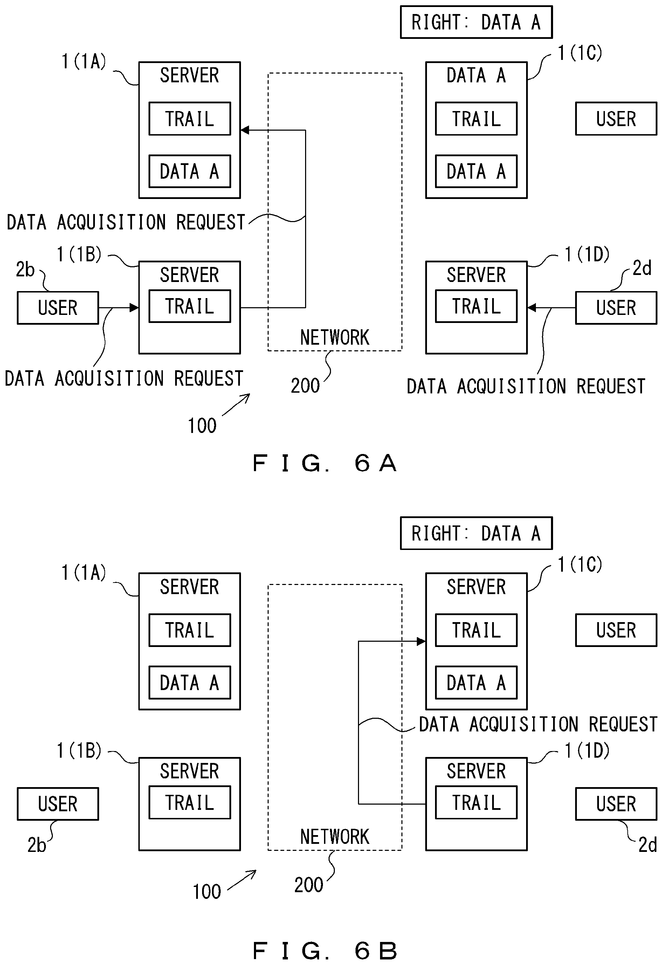

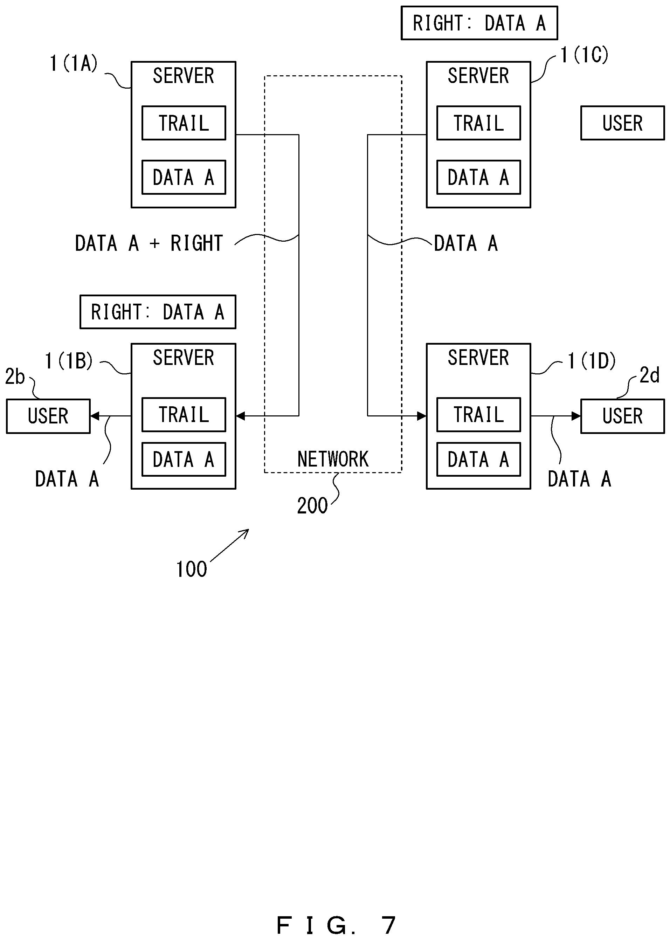

FIGS. 6A, 6B, and 7 illustrate an example of a method for selecting an access server. In this example, the server computer 1C has acquired data A from the server computer 1A through the data acquisition process depicted in FIGS. 3A, 3B, and 4 and has data A in the local storage of the server computer 1C. The server computer 1C also has a right to transmit data A by proxy. In addition, the processes 1-4 depicted in FIG. 5 are recorded in the trail.

Subsequently, a user 2b requests data A, as depicted in FIG. 6A. Thus, the server computer 1B receives a data acquisition request designating data A. In this situation, the server computer 1B does not hold data A. Further assume that the server computer 1B is aware that the server computer 1A holds data A.

Accordingly, the server computer 1B refers to the trail so as to check the access status of the server computer 1A. In this example, the server computer 1A is not currently accessed. Assume, for example, that a specified time period or longer has elapsed since the time at which the "process 1" or "process 2" depicted in FIG. 5 was recorded. In this case, the server computer 1B transmits the data acquisition request designating data A to the server computer 1A.

Accordingly, the server computer 1B records, in the trail, information indicating that the data acquisition request designating data A has been transmitted to the server computer 1A. In particular, trail information pertaining to the "process 5" depicted in FIG. 5 is recorded. Subsequently, trail information indicating the "process 5" is reported to all of the server computers 1A-1D.

Further assume that immediately after the user 2b requested data A, a user 2d has also requested data A. In this situation, the server computer 1D does not hold data A. Further assume that the server computer 1D is aware that the server computer 1A holds data A.

The server computer 1D refers to the trail so as to check the access status of the server computer 1A. In this situation, the "process 1" to "process 5" depicted in FIG. 5 are recorded in the trail. Further assume that a specified time period has not elapsed yet since the time at which the "process 5" was recorded. In this case, the server computer 1D determines that the server computer 1A is being currently accessed. In particular, the server computer 1D determines that the server computer 1A (or the data A held by the server computer 1A) is being intensively accessed.

Accordingly, the server computer 1D refers to the trail so as to check whether there is a server computer that has a proxy transmission right for data A. In this example, information indicating that the server computer 1A has given the server computer 1C the proxy transmission right for data A is recorded as the "process 4" depicted in FIG. 5. Hence, the server computer 1D determines that the server computer 1C has the proxy transmission right for data A. Accordingly, the server computer 1D transmits a data acquisition request designating data A to the server computer 1C, as depicted in FIG. 6B.

Upon receiving the data acquisition request from the server computer 1B, the server computer 1A transmits data A to the server computer 1B, as depicted in FIG. 7. Thus, the server computer 1B stores the received data A in the local storage of this server computer and provides the user 2b with data A. In this example, the server computer 1A also gives the server computer 1B the proxy transmission right for data A.

The server computer 1C has data A in the local storage of this server computer and also has the proxy transmission right for data A. Thus, upon receiving the data acquisition request received from the server computer 1D, the server computer 1C transmits data A to the server computer 1D. Accordingly, the server computer 1D stores the received data A in the local storage of this server computer and provides the user 2d with data A.

The trail depicted in FIG. 5 is updated every time a communication process is performed by any of the server computers 1A-1D. In particular, trail information pertaining to a "process 6" is recorded when the server computer 1D transmits the data acquisition request to the server computer 1C. Trail information pertaining to a "process 7" is recorded when the server computer 1A transmits data A to the server computer 1B. Trail information pertaining to a "process 8" is recorded when the server computer 1B receives data A from the server computer 1A. Trail information pertaining to a "process 9" is recorded when the server computer 1A gives the server computer 1B the proxy transmission right. Trail information pertaining to a "process 10" is recorded when the server computer 1C transmits data A to the server computer 1D by proxy. Trail information pertaining to a "process 11" is recorded when the server computer 1A receives data A from the server computer 1C. The updated trail is shared among the server computers 1A-1D.

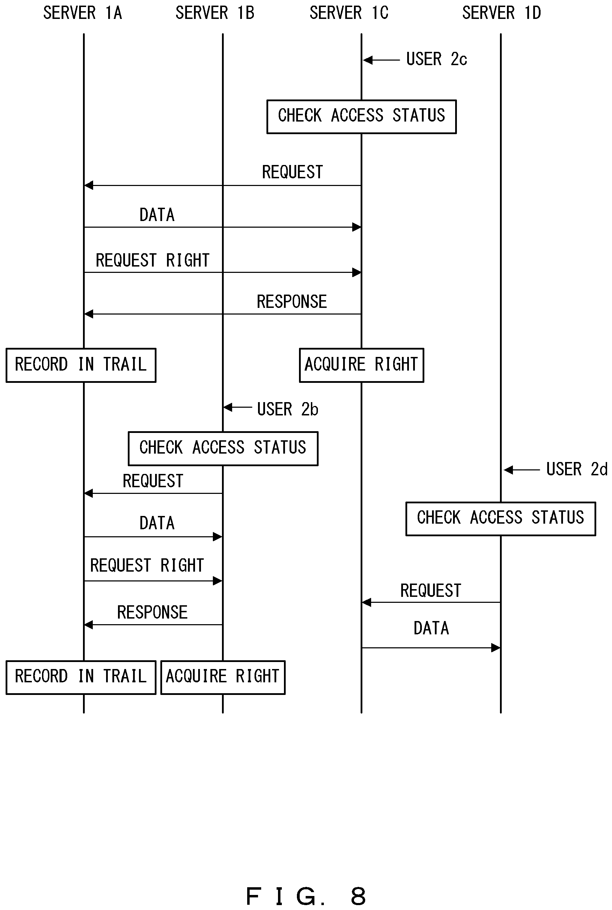

FIG. 8 illustrates an example of a data acquisition sequence using a proxy transmission right. Note that the sequence depicted in FIG. 8 corresponds to the example indicated in FIGS. 6A, 6B, and 7.

Upon receipt of a data acquisition request designating data A from a user 2c, the server computer 1C checks the access status of the server computer 1A by referring to a trail. Assume that in this case, none of the other server computers are accessing the server computer 1A. Hence, the server computer 1C transmits a data acquisition request to the server computer 1A, and in response to this request, the server computer 1A transmits data A to the server computer 1C. The server computer 1A also makes a request for the server computer 1C to transmit data A by proxy. When accepting this request, the server computer 1C transmits a response message to the server computer 1A. Through this sequence, the server computer 1C acquires a right to transmit data A by proxy.

The processes described above are recorded in the trail. For example, the "process 1" to "process 4" depicted in FIG. 5 may be recorded in the trail. The updated trail is reported to the server computers 1A-1D.

Upon receipt of a data acquisition request designating data A from a user 2b, the server computer 1B acquires data A from the server computer 1A. The procedure used by the server computer 1B so as to acquire data A is substantially the same as that used by the server computer 1C so as to acquire data A, and descriptions of such a procedure are omitted herein. The processes performed by the server computers 1A and 1B are also recorded in the trail. For example, the "process 5" and "process 7" to "process 9" depicted in FIG. 5 may be recorded in the trail. The updated trail is reported to the server computers 1A-1D.

Upon receipt of a data acquisition request designating data A from a user 2d, the server computer 1D checks the access status of the server computer 1A by referring to the trail. In this situation, the "process 5" is recorded in the trail as depicted in FIG. 5, and it is confirmed that the server computer 1A is being accessed by the server computer 1B. Hence, when the server computer 1D transmits a data acquisition request to the server computer 1A, a response from the server computer 1A could be delayed.

In this case, the server computer 1D refers to the trail so as to check whether there is a server computer that has a proxy transmission right for data A. In this example, the server computer 1C has a proxy transmission right for data A. Accordingly, the server computer 1D transmits a data acquisition request designating data A to the server computer 1C. As a result, the server computer 1D acquires data A from the server computer 1C.

The processes performed by the server computers 1C and 1D are also recorded in the trail. For example, the "process 6", "process 10", and "process 11" depicted in FIG. 5 may be recorded in the trail. The updated trail is reported to the server computers 1A-1D.

As described above, by referring to the trail, each of the server computers 1 can check the access status of a node to which a data acquisition request is to be transmitted and identify a node that has a proxy transmission right for target data. Accordingly, while a data providing server is being intensively accessed, the server computer 1 can transmit a data acquisition request to another server that has a proxy transmission right. That is to say, while a data providing server is being intensively accessed, the load pertaining to a data transaction is distributed without accessing the data providing server (i.e., without performing a redirecting process). As a result, a delay in the data acquisition process can be avoided or reduced. In addition, deterioration of responses that could be caused by intensive access in a distributed network can be reduced.

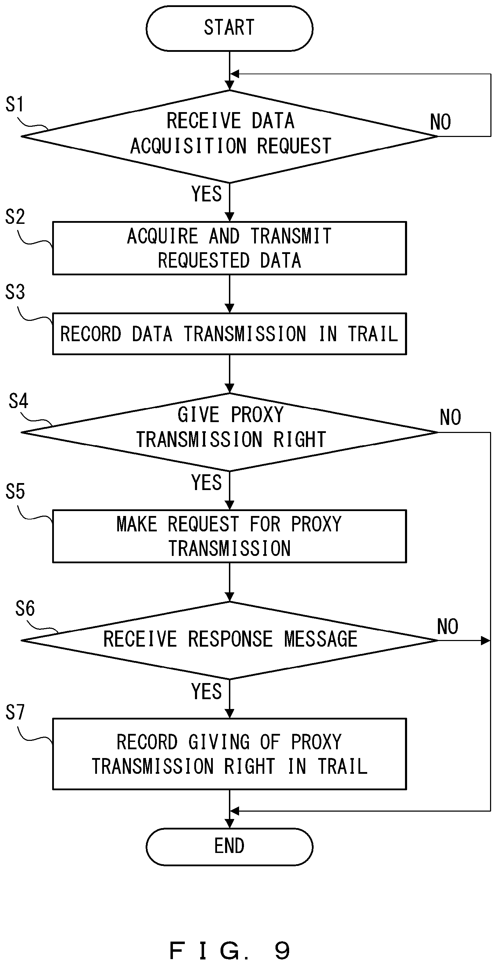

FIG. 9 is a flowchart illustrating an example of a process performed by a server computer that provides data. For example, the processes of this flowchart may correspond to the operations of the server computer 1A depicted in FIGS. 3A-8.

In S1, the server computer 1 waits for a data acquisition request to be transmitted from another server computer. Upon receipt of a data acquisition request transmitted from another server computer, the process of the server computer 1 shifts to S2. The data acquisition request designates target data requested by a user. A server computer that is the source of a data acquisition request may hereinafter be referred to as a "data acquiring server".

In S2, the server computer 1 acquires the target data requested according to the data acquisition request from the local storage of this server computer. The server computer 1A transmits the acquired target data to the data acquiring server.

In S3, the server computer 1 records, in a trail, information indicating that this server computer has transmitted the target data to the data acquiring server. For example, the process of S3 may correspond to the "process 2" depicted in FIG. 5. The server computer 1 reports the trail after the update to all server computers connected to the network 200.

In S4, the server computer 1 decides whether to give a proxy transmission right to the data acquiring server. For example, a server computer that may be given a proxy transmission right may be determined in advance. Whether to give a proxy transmission right may be decided for each piece of data. In addition, a desired condition (e.g., effective period) may be set for a proxy transmission right.

When giving the proxy transmission right, the server computer 1 transmits, in S5, a request for a proxy transmission of the target data transmitted in S2 to the data acquiring server. Upon receipt of the request, the data acquiring server transmits a response message when accepting the request for the proxy transmission.

In S6, the server computer 1 waits for a response message with respect to the proxy transmission right from the data acquiring server. When receiving the response message within a specified time period, in S7, the server computer 1 records, in the trail, information indicating that this server computer has given the proxy transmission right to the data acquiring server. For example, the process of S7 may correspond to the "process 4" depicted in FIG. 5. The server computer 1 reports the trail after the update to all server computers connected to the network 200.

As described above, when target data has been transmitted to a data acquiring server, the server computer 1 may give a proxy transmission right to the data acquiring server. Information indicating that the proxy transmission right has been given to the data acquiring server is recorded in the trail and reported to all server computers. Hence, each server computer 1 can determine, for each piece of data, whether there is a server computer that has a proxy transmission right and determine which server computer, if any, has the proxy transmission right.

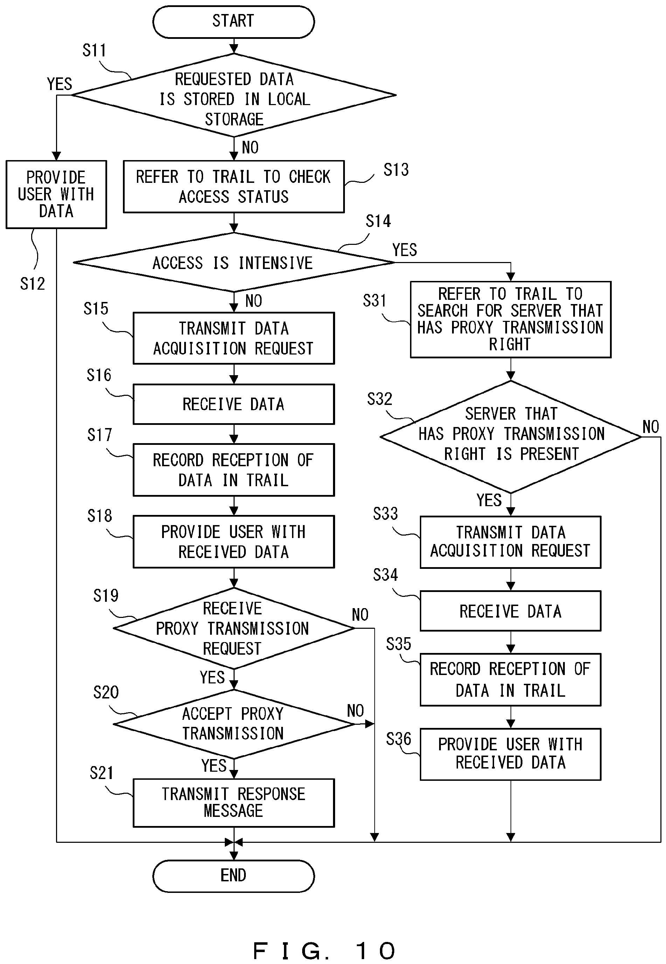

FIG. 10 is a flowchart illustrating an example of a process performed by a server computer that acquires data. For example, the processes of this flowchart may correspond to the operations of the server computers 1B-1D depicted in FIGS. 3A-8. The processes of this flowchart are performed when a user requests data.

In S11, a server computer 1 decides whether target data requested by a user is stored in the local storage of this server computer. When the target data is stored in the local storage, the server computer 1 provides the user with the target data in S12. Otherwise, the process of the server computer 1 shifts to S13.

In S13-S14, the server computer 1 detects a server computer that holds the target data requested by the user. A server holding target data may hereinafter be referred to as a "data providing server". The server computer 1 refers to the trail so as to check the access status of the data providing server. In this case, for example, the server computer 1 may decide whether a frequency at which the data providing server is accessed is greater than a specified threshold. The access frequency indicates, for example, the number of data acquisition requests made for the data providing server per unit time.

When the frequency at which the data providing server is accessed is less than or equal to the specified threshold, it is decided that the data providing server is not being intensively accessed (S14: No), and the server computer 1 transmits a data acquisition request to the data providing server in S15. The data acquisition request designates the target data requested by the user. The data providing server provides the target data at the data acquisition request.

In S16, the server computer 1 receives the target data from the data providing server. In S17, the server computer 1 records, in the trail, information indicating that this server computer has received the target data from the data providing server. For example, the process of S17 may correspond to the "process 3" depicted in FIG. 5. The server computer 1 reports the trail after the update to all server computers connected to the network 200. In addition, in S18, the server computer 1 provides the user with the target data received from the data providing server.

In S19, the server computer 1 waits for a proxy transmission request for the target data received in S16. Upon receipt of the proxy transmission request, the server computer 1 decides whether to accept the request in S20. When accepting the proxy transmission request, the server computer 1 transmits a response message to the data providing server in S21. The server computer 1 skips the process of S21 when the proxy transmission request is not received within a specified time period since the data acquisition request was transmitted in S15 or when this server computer does not accept the proxy transmission request.

When the frequency at which the data providing server is accessed is greater than the specified threshold, it is decided that the data providing server is being intensively accessed (S14: Yes), and the process of the server computer 1 shifts to S31. In S31-S32, the server computer 1 refers to the trail so as to search for a server that has the proxy transmission right. When, for example, the "process 4" is recorded in the trail depicted in FIG. 5, it is determined that the server computer 1A has given the server computer 1C a proxy transmission right for data A. A server that has a proxy transmission right for target data may hereinafter be referred to as a "proxy transmission server".

When a proxy transmission server is present, the server computer 1 transmits a data acquisition request to the proxy transmission server in S33. This data acquisition request designates the target data requested by the user. The proxy transmission server provides the target data in response to the data acquisition request.

In S34, the server computer 1 receives the target data from the proxy transmission server. In S35, the server computer 1 records, in the trail, information indicating that this server computer has received the target data from the proxy transmission server. For example, the process of S35 may correspond to the "process 11" depicted in FIG. 5. The server computer 1 reports the trail after the update to all server computers connected to the network 200. In addition, in S36, the server computer 1 provides the user with the target data received from the proxy transmission server.

As described above, by referring to the trail, the server computer 1 can detect whether the data providing server is being intensively accessed. When the data providing server is being intensively accessed, the server computer 1 can detect, by referring to the trail, a proxy transmission server that has a right to provide target data. When the data providing server is being intensively accessed, the server computer 1 acquires the target data from the proxy transmission server without accessing the data providing server. Hence, a response delay that could be caused by intensive access to the data providing server is reduced.

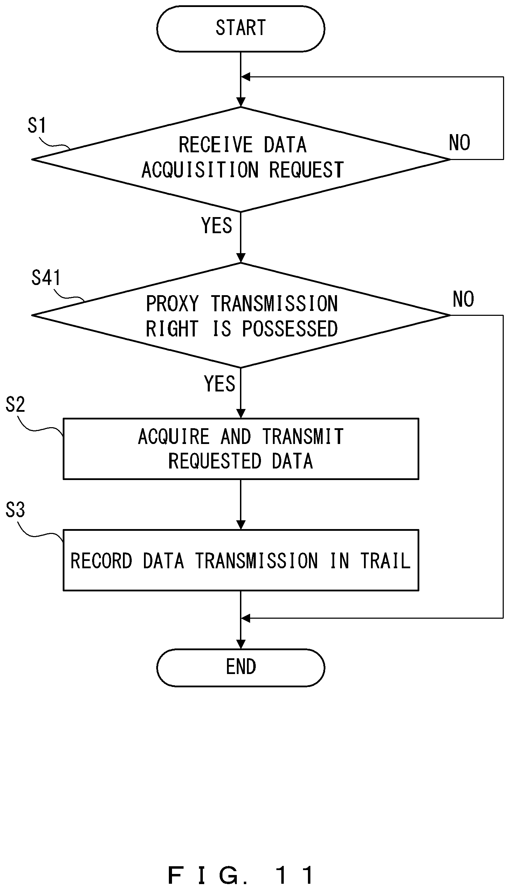

FIG. 11 is a flowchart illustrating an example of a process performed by a server computer that provides data according to a proxy transmission right. For example, the processes of this flowchart may correspond to the operation of the server computer 1C depicted in FIGS. 6A-8.

The process of S1 in FIG. 9 is substantially the same as that of S1 in FIG. 11. Thus, a server computer 1 waits for a data acquisition request to be transmitted from another server computer. However, upon receipt of a data acquisition request transmitted from another server computer, the process of the server computer 1 shifts to S41.

In S41, the server computer 1 checks whether this server computer has a proxy transmission right for requested target data. The server computer 1 performs S2-S3 when this server computer has a proxy transmission right for the target data. In particular, the server computer 1 transmits the target data to the data acquiring server. The server computer 1 also records, in a trail, information indicating that this server computer has transmitted the target data to the data acquiring server. In this way, the server computer 1 transmits the target data to the data acquiring server when this server computer has a proxy transmission right for the target data.

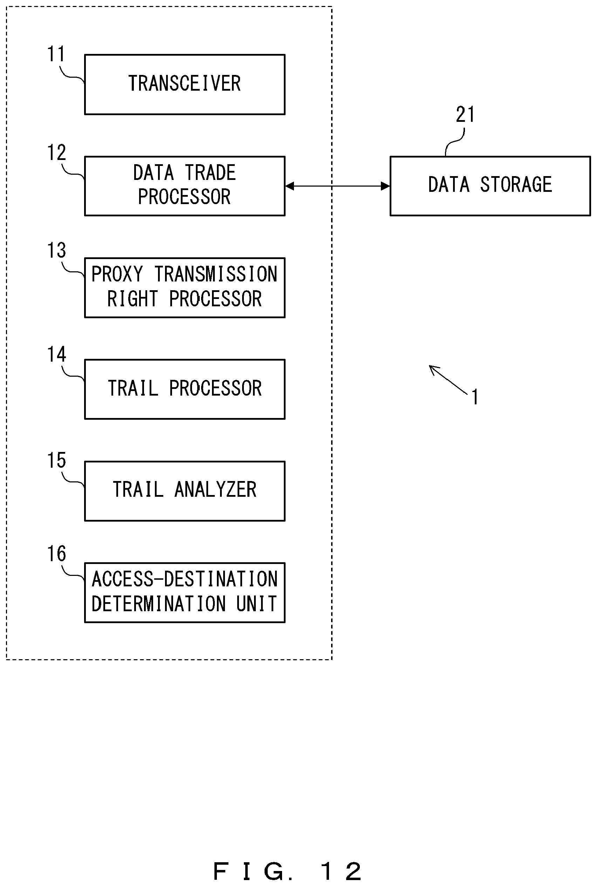

FIG. 12 illustrates examples of the functions of a server computer 1. As depicted in FIG. 12, the server computer 1 includes a transceiver 11, a data trade processor 12, a proxy transmission right processor 13, a trail processor 14, a trail analyzer 15, an access-destination determination unit 16, and a data storage 21. The server computer 1 may include functions that are not depicted in FIG. 12. Note that the server computer 1 is an example of the communication device in accordance with embodiments of the invention.

The transceiver 11 provides an interface for connection to the network 200. The transceiver 11 also provides an interface for connection to a user terminal.

The data trade processor 12 processes an access received from a user or another server computer. For example, the data trade processor 12 may acquire data requested by a user from the data storage 21 and provide the user with this data. When data requested by the user is not stored in the data storage 21, the data trade processor 12 transmits a data acquisition request designating this data to another server computer. In addition, when receiving a data acquisition request from another server computer, the data trade processor 12 acquires the requested data from the data storage 21 and provides the other server computer with this data.

The proxy transmission right processor 13 may give a proxy transmission right to another server computer. The proxy transmission right processor 13 manages a proxy transmission right given to this proxy transmission right processor 13 by another server computer. The data trade processor 12 may perform a proxy transmission of requested data in cooperation with the proxy transmission right processor 13.

When the server computer 1 performs a process, the trail processor 14 records information indicating this process in the trail. Trail information is stored in a storage region that the trail processor 14 can access. The trail processor 14 reports the updated trail to other server computers. Hence, the updated trail is shared among all server computers connected to the network 200.

By referring to the trail, the trail analyzer 15 can recognize processes performed by server computers connected to the network 200. For example, the trail analyzer 15 may detect the access status of other server computers. In addition, for each piece of data, the trail analyzer 15 can search for a server computer that has a proxy transmission right.

The access-destination determination unit 16 has a function for determining a server computer (i.e., access destination) for which a request to transmit target data is to be made. For example, when a data providing server for providing target data is not being intensively accessed, the access-destination determination unit 16 may select this data providing server as an access destination. When the data providing server is being intensively accessed and a proxy transmission server for the target data is present, the access-destination determination unit 16 selects this proxy transmission server as an access destination.

The processes depicted in FIGS. 9-11 are implemented by the data trade processor 12, the proxy transmission right processor 13, the trail processor 14, the trail analyzer 15, and the access-destination determination unit 16. In particular, when the server computer 1 is operated in accordance with either of the flowcharts depicted in FIGS. 9 and 11, S1-S2 are performed by the data trade processor 12, S4-S6 or S41 is performed by the proxy transmission right processor 13, and S3 and S7 are performed by the trail processor 14. When the server computer 1 is operated in accordance with the flowchart depicted in FIG. 10, S11, S12, S15, S16, S18, S33, S34, and S36 are performed by the data trade processor 12. S13 and S14 are performed by the trail analyzer 15. S31 and S32 are performed by the trail analyzer 15 and the access-destination determination unit 16. S19-S21 are performed by the proxy transmission right processor 14. S17 and S35 are performed by the trail processor 14.

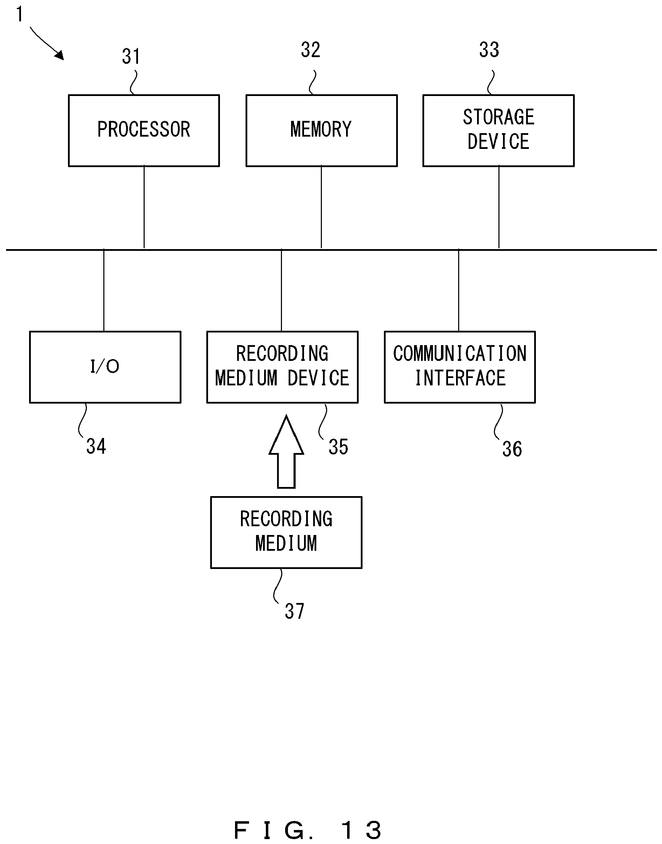

FIG. 13 illustrates an example of the hardware configuration of a server computer 1. The server computer 1 includes a processor 31, a memory 32, a storage device 33, an I/O device 34, a recording medium device 35, and a communication interface 36. The server computer 1 is an example of the communication device in accordance with embodiments of the invention.

The processor 31 may provide the functions of the server computer 1 by executing a communication program stored in the storage device 32. In particular, the processor 31 provides the functions of the data trade processor 12, the proxy transmission right processor 13, the trail processor 14, the trail analyzer 15, and the access-destination determination unit 16 by executing a communication program describing the processes of the flowcharts depicted in FIGS. 9-11 or the processes performed by the server computer 1 that are indicated in the sequence depicted in FIG. 8.

The memory 32 is, for example, a semiconductor memory and used as a work area for the processor 31. The storage device 33 may be implemented in, or connected to, the server computer 1. Trail information is stored in the memory 32 or the storage device 33. The I/O device 34 accepts an instruction from a user or a network administrator. The I/O device 34 outputs a result of processing performed by the processor 34. The recording medium device 35 reads a signal recorded in a removable recording medium 37. The above-described communication programs may be recorded in the removable recording medium 207. The communication interface 36 includes an interface for data communications and an interface for communicating control information.

## Claims

1. A communication program for causing a processor (31) that is implemented in a communication device (1A) among a plurality of communication devices (1A-1D) in a distributed network in which the plurality of communication devices share a trail to execute a communication process, the communication process comprising:
transmitting, when data is requested from a first communication device (1C) among the plurality of communication devices, the data to the first communication device and giving a right to transmit the data to another communication device to the first communication device; and
recording, in the trail, information that indicates the first communication device has the right to transmit the data to another communication device.

2. The communication program according to claim 1, wherein
the information that indicates the first communication device has the right is recorded in the trail after the communication device receives, from the first communication device, a message indicating that the first communication device has accepted the right.

3. The communication program according to claim 1, the communication process further comprising:
recording, in the trail, information indicating that the data has been transmitted to the first communication device.

4. A communication device (1A) among a plurality of communication devices (1A-1D) that share a trail, the communication device comprising:
a first processor (12) configured to transmit, when data is requested from a first communication device (1C) among the plurality of communication devices, the data to the first communication device;
a second processor (13) configured to give the first communication device a right to transmit the data to another communication device; and
a third processor (14) configured to record, in the trail, information that indicates the first communication device has the right to transmit the data to another communication device.

5. A communication method used in a distributed network in which a plurality of communication devices (1A-1D) share a trail, wherein
a first communication device (1C) among the plurality of communication devices makes a request for a second communication device (1A) among the plurality of communication devices to provide the first communication device with target data,
the second communication device transmits the target data to the first communication device and gives the first communication device a right to transmit the target data to another communication device, and
the second communication device records, in the trail, information that indicates the first communication device has the right to transmit the target data to another communication device.

6. The communication method according to claim 5, wherein
the first communication device transmits a response message to the second communication device when accepting the right given to the first communication device by the second communication device, and
after receiving the response message from the first communication device, the second communication device records, in the trail, information that indicates the first communication device has the right.

7. The communication method according to claim 5, wherein
a third communication device (1D) among the plurality of communication devices is configured to
check an access status of the second communication device,
make a request for the second communication device to provide the third communication device with the target data when a frequency at which the second communication device is accessed is less than or equal to a specified threshold, and
when the frequency at which the second communication device is accessed is greater than the threshold, detect according to the trail that the first communication device has the right, and make a request for the first communication device to provide the third communication device with the target data.
